# EUROPEAN PATENT SPECIFICATION

(11) **EP 3 820 973 B1**
(45) Date of publication and mention of the grant of the patent: **10.07.2024**
(21) Application number: 19750176.0
(22) Date of filing: 11.07.2019
(51) Int. Cl.: C10L 11/06, C10L 11/04, C10L 5/44

(54) **FIRE TRANSMISSION DEVICE AND ITS SUITABLE KIT**
FEUERÜBERTRAGUNGSVORRICHTUNG UND GEEIGNETES KIT DAFÜR
DISPOSITIF DE TRANSMISSION DE FEU ET SON KIT APPROPRIÉ

(30) Priority: 12.07.2018 BE 201800081
(43) Date of publication of application: 19.05.2021
(73) Proprietor: van Driessche, Johan, 9600 Ronse (BE)
(72) Inventor: VAN DRIESSCHE, Johan, 9600 Ronse (BE)
(74) Representative: Brantsandpatents bv
(86) International application number: PCT/IB2019/055915
(87) International publication number: WO 2020/012402

(56) References cited:
- DE-A1- 3 510 429
- JP-U- S5 774 951
- US-A- 213 768
- US-A1- 2006 162 244
- US-A1- 2011 126 452
- US-A1- 2013 247 455
- US-A1- 2016 075 960

## Description

### FIELD OF THE INVENTION

The Present Invention relates to a fire transmission device suitable for transmitting fire to adjacent combustible materials. The invention also relates to a kit composed of a fire transmission device and a suitable fire lighting element.

In particular, the invention is situated in the technical field of combustion devices for igniting and lighting fires C10L11/06 and C10L5/44.

### BACKGROUND

There are many different fire transmission devices and methods known to be able to transfer fires, for example to ignite a wood fire. Traditionally, a fire is ignited with paper or cardboard, which creates an initial flame that ignites small woods or twigs sorted next to it and above it. Once ignited, these in turn ignite larger pieces of material that are more difficult to ignite and that burn for a longer time, such as cleaved pieces of wood, stumps of wood or also logs.

Nowadays, fire accelerators are mostly used, in the form of so-called firelighters, which are stacked between smaller pieces of wood. These fire accelerators have compact shapes and are made of a mixture of naturally combustible materials, such as a combination of oil and wood shavings.

Finally, quite recently, there are also 'super starters' on the market, which consist of a combustible paper coating, containing a pressed solid fuel ('briquette'), which consists of combustible materials such as a mixture of (natural) oils or fats and (wood) fibers.

In general, for a good and smoke-free ignition, the methods mentioned above require the use of small wood or twigs that are stacked according to a certain method. There are two basic methods for this.

In the traditional method, kindling wood is placed crosswise at the bottom of the fire base. A sufficient number of firelighters and/or paper are then placed in between the kindling wood. Further, two to three fine logs are placed on the kindling wood at a small distance from each other. Finally, once the fire has been ignited, one or more large logs are placed on top of the fire. Due to the imperfect ignition of the larger pieces of wood and the obstruction of a good air circulation to and around the kindling wood, a lot of smoke is easily generated with this method.

With the reverse method, the 'top down method' or 'Swiss method', to ignite the fire, the smallest combustible material is placed on top, and the larger logs at the bottom. The advantage of this method of combustion is that, from the very start, an almost complete combustion arises, which quickly causes fire without a lot of harmful smoke due to the imperfect ignition.

The speed and success of a good ignition of the fire (even when using super starters) depends on a number of factors, such as the kind of fire, the firelighters, the amount of smaller pieces of wood, the amount of wood logs, the kind of wood, the way in which the wood is stacked, etc... Even external circumstances can have an impact; for example, in cold and humid weather, flue gases can 'kick back' when igniting a fire because the chimney has not yet warmed up. After all, the chimney can only draw well when the inside is warmer than the open air. Often the chimney is heated prior by rolling up a piece of newspaper into a torch and holding it burning in the stove or in the wood fire. Igniting an outer fire can be hindered by weather conditions such as wind.

imperfect combustion is a problem for the environment; it releases harmful flue gases and more fine dust than with good combustion. For example, imperfect combustion also leads for example to soot and dust particles hitting the windows of the stove, thus reducing the visibility of the fire.

Those who wish to ignite the stove or fireplace must therefore generally have firelighters, kindling wood and wood logs, which he must stack properly to prevent the development of visible flue gases due to imperfect combustion, and whereby he must regularly check the fire during the first quarter of an hour, adjusting and top up if necessary. Additionally, kindling wood is not always enjoyable to bring in or stack at the wood fire, as it leaves wood dust and chips indoors.

When igniting coals, briquettes or other combustible materials, similar problems arise. As an example, reference can be made to igniting coals or briquettes for barbecues, which often goes hand in hand with the development of smoke because, for example, the initial firelighter is placed underneath the coals or briquettes, or they are poured over the fireligliter, which leads to imperfect combustion and the development of smoke.

A combustible smoke-free briquette is described in US2006/0162244. The briquette consists of two parts containing air channels. The two parts of the briquette are stacked on top of each other, internally creating a space for the lighting material. The disadvantages are that igniting the briquette due to the internal space is cumbersome, that the briquette contains non-combustible adhesives and that it is not intended for fire transfer.

US2016/0075960 describes a torch intended for fire transmission. The torch has a central bore with lighting material in one or more locations. These locations have air supply via a radial channel. With this solution, there are no additional vertical channels that boost equal combustion of the torch, which is detrimental for the fire transmission.

The invention in US2013/0247455 is a combustible object for starting a fire. It consists of a log containing at least one vertical channel and at least one horizontal channel for air supply. In this form, the object is not optimized for a quick and equal combustion and fire transmission.

US2011/0126452 describes a simple combustible object with a vertical internal cavity, with a radial channel for air supply at the bottom. The object burns equally from the inside to the outside. It is intended to burn long and not for fire transmission.

JPS5774951 is the description of a briquette with a hole containing a lighting plate. There are air channels in the briquette, in the lighting plate and between both parts. The inside of the hole is covered with and the lighting plate consists of specific ignition materials. The lighting plate ignites the briquette, but is not intended to transmit fire to other combustible materials.

DE 3510429 discloses a cuboidal firelighter block made of wood, having vertical grooves in its side walls and horizontal grooves on the underside. The block may have a central vertical bore.

The invention aims to solve at least some of the disadvantages mentioned above. It aims at a successful and simple fire transmission without preparation and independent of the user's knowledge of igniting fires in the most natural and simplest way possible, and this without the need for kindling wood, only with the help of the invention.

### SUMMARY OF THE INVENTION

The invention provides therefore a fire transmission device according to claim 1, namely a fire transmission device made of a cornbustible material capable of transmitting fire to adjacent combustible materials such as cokes, wood, wood pellets, charcoal, coconut or other briquettes, being made of a block shaped combustible material having two levels, an upper and a lower level; the upper level having 3 to 7 standing bores and the lower level having 4 to 10 recumbent grooves whereby continuous air channels are provided throughout the two levels.

In a preferred embodiment, the fire transmission device contains a fire lighting element in a vertical opening, also called a firelighter in this application, which in a preferred embodiment should preferably be slightly recessed in this opening.

The invention thus responds to the problems described in the technical background, by providing a solid form of a combustible device with optimal shape and optimal airflows.

The invention is simple to use, requires no use of newspaper or cardboard, no small pieces of wood or twigs, no stacking of small pieces of wood and wood logs in the fireplace or stove, and only one firelighter (whether or not integrated in the invention) to ignite a fire. The invention ensures by its shape optimal airflows so that smoke hardly develops, which is better for the environment. Because hardly any smoke is produced when igniting the fire, the window of the stove needs less cleaning. The invention protects the firelighter against the wind. The invention reduces the risk of flue gas kickbacks, even on cold winter days. The invention takes up almost no space and keeps the surroundings of the stove or fireplace cleaner than is the case with the stacking of kindling wood and twigs. It is, in an embodiment, a 100% natural product, made from branches, easy to produce, and thus meets environmental concerns. The invention increases the combustible surface. With the invention, the fire ignites easily, quickly and in a way that is beautiful to look at.

The device is preferably ignited through the firelighter. The ignition consecutively first ensures the initial heating of the chimney, then an optimal ignition of the device and finally a smooth ignition of the larger combustible material on the basis of the aforementioned Swiss method, without further kindling wood being required.

In the same way, a barbecue can be ignited by putting the invention on charcoal or on top of a so-called charcoal starter filled with charcoal, coconut or other briquettes, or other combustible material that is more difficult to ignite because of its size itself. The invention can also be dimensioned so that there is sufficient combustible material on hand, in order that it is not necessary to refill the barbecue with other combustible material, e.g. for cooking the meat.

The invention can therefore be used to ignite all types of fire, such as a wood fire, stove, outer fire, barbecue, etc. These devices can be filled with all classically used combustible materials, such as wood, coal, briquettes of lignite, charcoal, compressed wood waste or biomass (or a combination of those).

The invention preferably consists of a natural material, e.g. a piece of wood, in which in two levels standing indentations or openings, or more specifically vertical, and recumbent indentations or openings, or more specifically horizontal, openings are made that are connected by an air connection. These openings and holes combine three aspects: solidity, optimal airflows and an optimal arrangement of the wood around the indentations, thereby increasing the combustible outer surface that serves as kindling wood.

Preferably, the invention includes a small firelighting element according to claim 2 in the form of an adapted firelighter, preferably made of 100% natural materials, which is inserted into the intersection of a recumbent and standing indentation and which provides the initial flame. Due to the shape of the invention, airflows cause the invention and the combustible material to ignite quickly. In addition, the optimal ignition produces a minimum of smoke, so that less toxic substances are produced by imperfect combustion.

The invention can be placed on top of the combustible materials to ignite the combustible materials according to the Swiss method. The height of the flame and the speed of ignition are regulated by the shape of the invention, as well as the shape and position of the firelighter.

Specific embodiments of the invention relate to preferred devices according to any of the dependent claims 3-10, or to a kit according to claim 11.

In a preferred embodiment, the invention relates to a wooden cylindrical segment from a trunk or branch in which the indentations or openings are made by means of drilling, sawing and/or milling adjustments.

In another preferred embodiment, the invention relates to pre-processed alternatives made from charcoal, compressed (waste) wood, cardboard, biomass or any other highly combustible product or combination of products.

In a further preferred embodiment, the invention relates to alternatives made of pressed charcoal, briquettes or other combustible materials, which not only permits to, for example, ignite a barbecue, but also to have sufficient combustible material due to the solid shape and size of the invention, so that, only with the help of the invention, the barbecue is ignited and becomes sufficiently hot to start cooking food, without refilling the barbecue with coals or briquettes, which is accompanied by the development of smoke.

### DESCRIPTION OF FIGURES

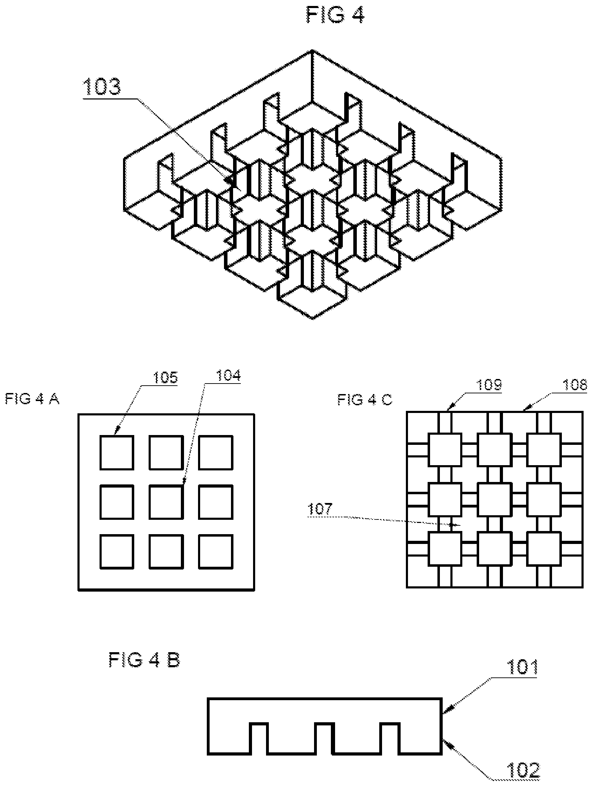

The embodiment of the present invention will be described in more detail, referring to drawings that are not restrictive, and wherein references to identical reference numbers in different drawings indicate identical elements, and wherein:

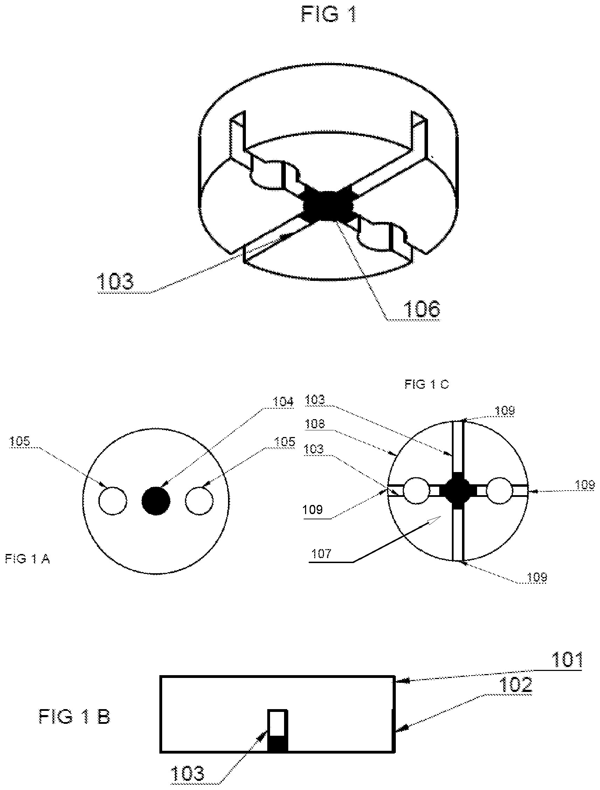

**FIG 1** shows an isometric view of an embodiment not according to the invention in a simple cylindrical shape, with two levels, viewed from below at an oblique angle, with three circular openings and two indentations. **FIG 1** **A** is a top plan view of FIG 1; **FIG 1** **B** is a side view of FIG 1; **FIG 1** **C** is a bottom view of FIG 1.

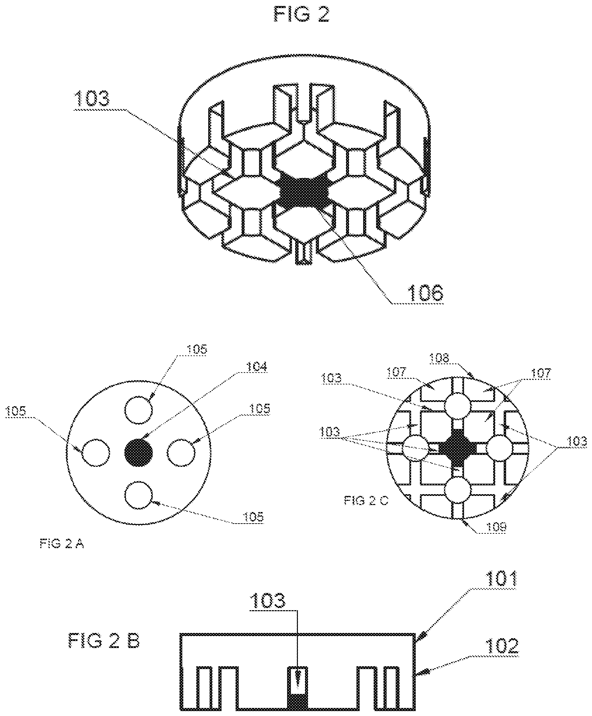

**FIG 2** shows an isometric view of an embodiment of the invention in a cylindrical shape, with two levels, viewed from below at an oblique angle, with five circular openings and six indentations, where each opening has two indentations connected. **FIG 2** **A** is a top plan view of FIG 2; **FIG 2** **B** is a side view of FIG 2; **FIG 2** **C** is a bottom view of FIG 2.

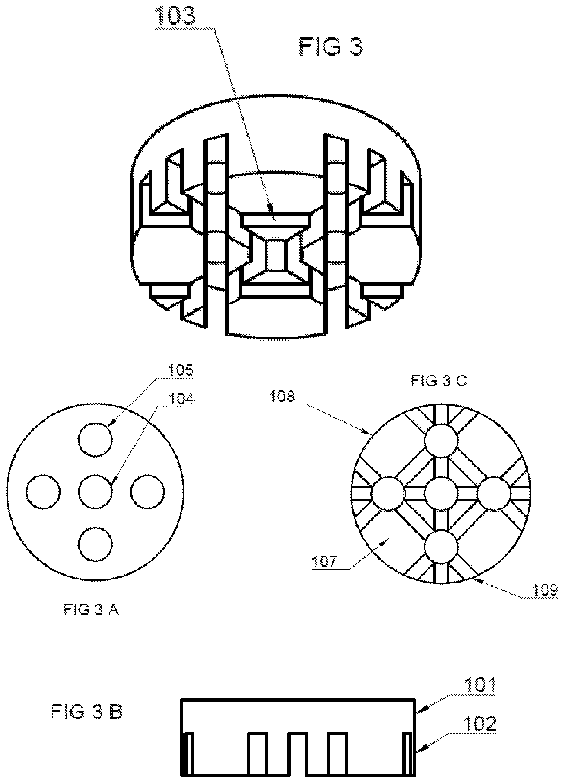

**FIG 3** shows an isometric view of an embodiment of the invention in a cylindrical shape, with two levels, viewed from below at an oblique angle, with five circular openings and six indentations, where each opening, except for the middle one, has three indentations connected. **FIG 3** **A** is a top plan view of FIG 3; **F! G 3 B** is a side view of FIG 3; **FIG 3** **C** is a bottom view of FIG 3.
**F! G 4** shows an isometric view of an embodiment not according to the invention in a square shape, with two levels, viewed from below at an oblique angle, with nine square openings and six indentations, where each opening has two indentations connected. **FIG 4** **A** is a top plan view of FIG 4; **FIG 4** **B** is a side view of FIG 4; **FIG 4** **C** is a bottom view of FIG 4.
**FIG 5** shows an isometric view of an embodiment not according to the invention in a square shape, with three levels, viewed from below at an oblique angle, with nine circular openings and six indentations, where each opening has two indentations connected. **FIG 5** **A** is a top plan view of FIG 5; **FIG 5** **B** is a side view of FIG 5; **FIG 5** **C** is a bottom view of FIG 5.
**FIG 6** shows an isometric view of an embodiment not according to the invention in an oval shape, with two levels, viewed from below at an oblique angle, with twenty-one circular openings and eight indentations, where each opening has two indentations connected. **FIG 6** **A** is a top plan view of FIG 6; **FIG 6** **B** is a side view of FIG 6; **FIG 6** **C** is a bottom view of FIG 6.
**FIG 7** shows a use of the invention according to **FIG 2** to ignite a wood fire.
**FIG 8** shows a use of the invention according to **FIG 2** to ignite coals or briquettes.

### DETAILED DESCRIPTION OF THE INVENTION

The present invention will now be described in more detail, referring to examples or drawings that are not restrictive.

According to a first embodiment, the invention relates to a cylindrical piece of wood with a height h, consisting of two levels, in which the device has, at a upper side, with a height h1 (the first level or upper level), at least three or more bores or standing holes (openings) with a depth of at least h1 to h, and has, at the opposite lower side (the second level or lower level), at least four or more recumbent grooves ('indentations) of a height h2, wherein the sum of the heights h1 + h2 is equal to h, and the openings and indentations are connected to each other forming continuous air channels. The bores should preferably extend axially.

**Fl G 1** shows an isometric view of an embodiment not according to the invention in a simple cylindrical shape, with two levels, level 1 (**101**) and level 2 (**102**), in which at least one opening has been made (**104**), in this case three (**104** and **105**), which cross both levels, and at least one indentation has been made, in this case two (**103**), at the second level. The openings and indentations are connected to each other. The first level (**101**) provides the solidity of the device. The indentations (**103**) provide an optimal airflow and divide the full-scale wood into smaller pieces (**107**), obtaining optimally sorted kindling wood. The smoke is sucked out through the openings (**104** and **105**), which also act as a chimney.

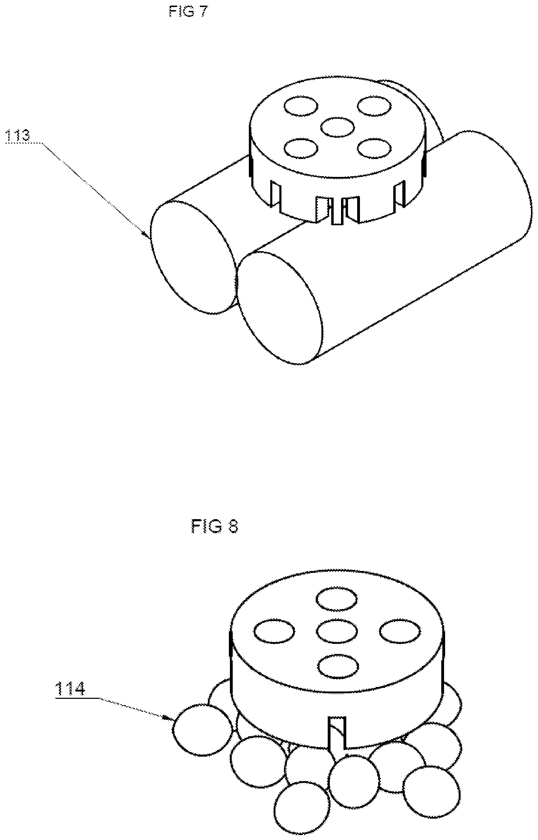

In use, the device invention is placed on top of two wood logs or branches (**113**) of a similar height, with a small gap in the middle of the wood logs (**FIG 7**) for optimal ignition, or on top of combustible material such as charcoal or coconut briquettes (**114**) (**FIG8**). The device a 2. is ignited by a firelighter, which, in a preferred embodiment, is slightly recessed in the middle (**106**), or in another preferred embodiment vertically recessed in the opening. For the convenience of the user and to prevent the development of smoke, the firelighter can be ignited from above with the help of e.g. a match.

Once ignited, the flue gases are initially discharged through the opening in which the firelighter is fixed (**104**), which acts as a chimney. The fire spreads through the indentations (**103**) and the lower side of the smaller pieces (**107**). The indentations also serve to supply oxygen. Thus, the fire first reaches the other openings (**105**) and subsequently the edge of the device (**108**), after which the device ignites completely. As the device is positioned on top of the combustible material **(****FIG 7** **-** **FIG 8**), there is an optimal oxygen aspiration and canalization of the burned gases, so that almost no smoke arises, and the underlying wood logs ignite quickly. With larger wood logs (+40 cm), once the device burns completely, a wood log can be placed on top of the device invention in such a way that the openings are covered. In this way, the air circulation is altered and the flames are pushed outside through the edges of the indentations (**109**), causing the wood logs on which the device rests to ignite over their entire length.

The invention, in an embodiment, consists of natural wood. Different types of wood have a different calorific power and do not all burn in the same way. For example, hard woods such as oak, beech, ash and fruit trees burn longer; soft woods such as pinewood and poplar burn faster and extend more heat.

For the invention it is not important which type of wood is used, although, for a number of reasons, softer types of wood are preferred; they burn faster and are less sustainable, so it is ecologically more justified to choose those for igniting a fire. The type of wood will have an effect on the rate of ignition, among other things, together with other variables described in more detail in the table below, and wherein the parameters will have an effect on, among other things, the rate of ignition, the development of smoke and the duration of the structural maintenance during ignition:
*Description of the variables and their effect on the invention in an embodiment made of natural wood:*

| **Feature** | **Value** | | **Speed** | **Smoke development** | **Structural maintenance** |
|---|---|---|---|---|---|
| **Number of openings** | | | | | |
| | 1 | | -- | --- | +++ |
| | 2 | | -- | -- | +++ |
| | 3 | | + | + | ++ |
| | 6 | | +++ | +++ | + |
| | 8 | | +++ | +++ | + |

| **Diameter openings** | | | | | |
|---|---|---|---|---|---|
| | 1.6 cm | | -- | -- | +++ |
| | 2.0 cm | | - | - | +++ |
| | 2.5 cm | | ++ | ++ | ++ |
| | 3.0 cm | | +++ | +++ | ++ |
| | 3.5 cm | | + | ++ | + |

| **Distance openings (measured edge to edge)** | | | | | |
|---|---|---|---|---|---|
| | 0.5 cm | | +++ | ++ | - |
| | 1.0 cm | | ++ | +++ | + |
| | 2 cm | | + | + | ++ |
| | 5 cm | | - | - | +++ |
| | 7.5 cm | - | - | - | +++ |

| **Number of Indentations connected to one opening (total)** | | | | | |
|---|---|---|---|---|---|
| | 1 | | --- | --- | +++ |
| | 2 | | -- | -- | ++ |
| | 3 | | - | - | + |
| | 4 | | + + | ++ | + |
| | 6 | | +++ | +++ | - |
| | 8 | | +++ | +++ | - |

| **Height of the first level** | | | | | |
|---|---|---|---|---|---|
| | 1 cm | | +++ | +++ | - |
| | 2 cm | | ++ | ++ | + |
| | 3 cm | | + | + | ++ |
| | 5 cm | | + | + | +++ |

| **Width Indentations** | | | | | |
|---|---|---|---|---|---|
| | 0.6 cm | | -- | - | +++ |
| | 0.8 cm | - | - | + | +++ |
| | 1.0 cm | | ++ | ++ | ++ |
| | 1.2 cm | | +++ | +++ | ++ |
| | 1.4 cm | | ++ | ++ | 4 |

| **Height of the second level** | | | | | |
|---|---|---|---|---|---|
| | 1 cm | - | - | - | +++ |
| | 2 cm | | + | + | +++ |
| | 3 cm | | ++ | ++ | ++ |
| | 4 cm | | +++ | +++ | ++ |

| **Height of the shape** | | | | | |
|---|---|---|---|---|---|
| | 5 cm | | +++ | +++ | + |
| | 3 cm | | + | ++ | ++ |
| | 12 cm | | - | + | +++ |

| **Cross section of the shape** | | | | | |
|---|---|---|---|---|---|
| | 10 cm | | +++ | ++ | - |
| | 15 cm | | ++ | +++ | + |
| | 20 cm | | + | ++ | ++ |
| | 30 | - | - | + | +++ |

| **Number of firelighters** | | | | | |
|---|---|---|---|---|---|
| | 1 | | ++ | +++ | +++ |
| | 2 | | + + | + + | + + |
| | 4 | | + + + | + + | + + |
| | 3 | | + + + | + + | + + |

### Legend:

*'---' represents slow (in connection to speed), a lot of smoke (in connection to smoke development) and little structural maintenance during ignition (in connection to structural maintenance) and '+ + +' represents fast combustion, hardly any smoke development and long structural maintenance during ignition.*

**FIG 2** shows an isometric view of a more optimal embodiment made of natural wood in view of the relationship between speed, smoke development and structural maintenance with the following features, wherein a fire can be fully ignited in less than 15 minutes with virtually no smoke development:
- Height level 1 (**101**): 2,5 cm.
- Height level 2 (**102**) (= depth of indentations): 3 cm.
- Cross section of shape: 15 cm.
- Number of openings (**104 - 105**): 5.
- Number of indentations (**103**): 6.
- Shape: cylindrical (natural wood of branches or trunks)
- Width of indentations (**103**): 1.2 cm.
- Diameter of openings (**104-105**): 2.8 cm.
- Distance between the openings (edge to edge) (**104-105**): 0.5 cm.
- Number of indentations that cross openings: 2 (making a total of 4 indentations at an angle of 90°).
- Number of firelighters (**106**): 1
- Number of created kindling woods (**107**): 16

**FIG 3** shows an alternative of **FIG 2** with the same features, where the indentations are made in such a way that every time three indentations cross the holes, except for (**104**).

The shape of the openings and indentations in the aforementioned drawings is solely illustrative. Therefore, the openings can be circular or have a different shape (e.g. triangular, square, ...). The indentations can be e.g. run straight or curved, or can be applied rounded or angled. The standing openings or bores should preferably have a diameter of 15 to 35 mm, with natural wood this is preferably 24 to 28 mm, with coconut it can be smaller, up to 15 mm.

The shape of the invention itself also depends on the number of operations during the production process. In a most natural shape, dry straight trunks or branches with a cross section of 13-20 cm are stripped of all lateral branches and eventual their bark. In this case, the invention will have the outer shape of the edge of the trunk or branch from which the invention is made. Optionally, the wood can be adapted to equalize the cross section in order to obtain the cylindrical shape of **FIG 1-3****,** or another shape, such as that of **FIG 4****,** which shows an alternative with a square shape, and square openings (**104-105**), just like the invention can be triangular, rectangular or multi-angular, whether it consists of one log of wood or of composed wood.

For further production, the trunks or branches are rolled to a band which saws cylinders of 5.5 cm with a vertically mounted saw blade. These cylinders are rolled, fixed and pierced with five holes. The cylinders are then guided with a conveyor belt to a number of milling cutters or 'dado blades' that make the indentations. Finally, in a preferred embodiment, the firelighter is already placed during the production process.

In each embodiment, the invention can consist of other combustible materials, such as charcoal, pressed coconut, cardboard, combined wood waste, biomass or any other pressed combustible product. In such case, the production process will consist of pressing the combustible material, or a combination of combustible materials in the desired shape of the invention.

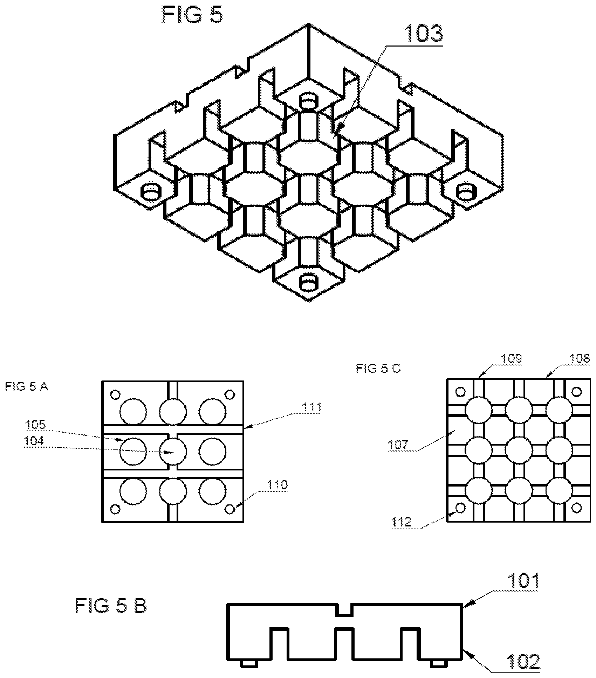

In a further embodiment, depending on the use of the device, additional elements may be added to the device, as shown in **FIG 5****,** i.e. one or more upper grooves (**111**), or lower grooves that cause a faster disintegration of the device in case of ignition, which can be useful when the device is used for barbecue, e.g. made out of pressed coconut briquettes.

Likewise, in a further embodiment, a third level can be added, in any form, in **FIG 5** represented as a cylinder with a width and a height of half a centimeter (**112**), so that the lower side (**107**) ignites more easily when used on an even surface without air supply at the bottom, e.g. when used on an outdoor kitchen or barbecue grill. This third level can also be used to facilitate and strengthen the stacking, by providing an indentation on the top surface of the first level (**110**).

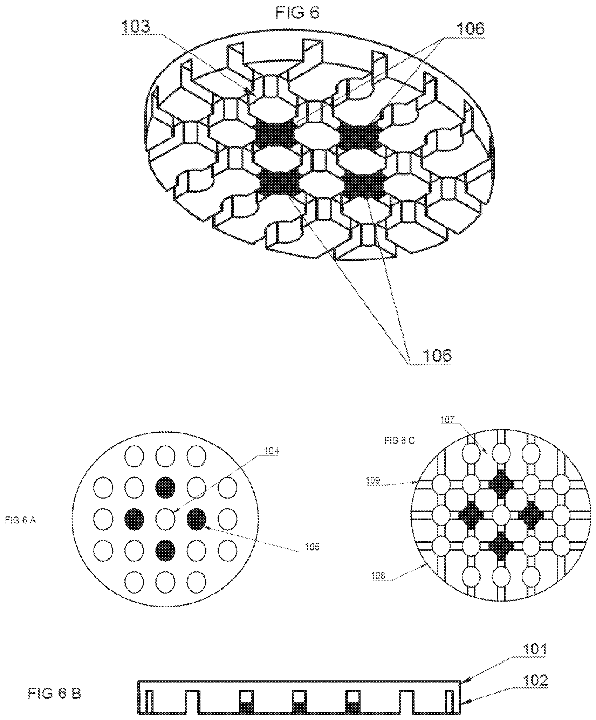

In a further embodiment, the size and shape can be adapted to the barbecue or outdoor kitchen, as illustrated in **FIG 6****,** so that the device does not only fit optimally in the barbecue but also ensures a nice equal distribution and combustion of the combustible material, without any additional action on the part of the user, or any additional combustible material needed to be added to have sufficient heat to prepare the food. If necessary, the ignition can be accelerated by adding more firelighters (**106**).

In a preferred embodiment, the fire transmission device has the following dimensions and specifications:

| **Feature** | **Value** |
|---|---|
| Material | Pinus sylvestris or Picea abies |
| Material of the firelighter | Natural firelighter |
| Height | 5.5 cm (min 5.0 cm - max 6.0 cm) |
| Cross section of the shape | 14 cm |
| Number of openings | 5 (min 4 - max 7) |
| Diameter of the middle opening | 2.8 cm (min 2.5 cm - max 3.0 cm) |
| Diameter of other openings | 2.8 cm (min 2.5 cm - max 3.0 cm) |
| Distance between the openings (edge to edge) | 0.5 cm (min 0.4 cm - max 1 cm) |
| Number of indentations | Min 6 (2 times 3 indentations at an angle of 90°) |
| Depth of indentations | 3.0 cm (min. 2.5 cm - max. 3.5 cm) |
| Width of indentations | 1.2 cm (min. 1.0 cm - max. 1.5 cm) |
| Number of indentations that cross openings | 2 (making a total of 4 channels at an angle of 90°) |
| Number of firelighters | 1 |
| Dimensions of firelighter | Slightly larger than the indentations so that the firelighter can be mechanically clamped in the indentations without the use of adhesives. |
| Number of kindling wood created | 16 (in this preferred embodiment) |

These dimensions and specifications have been carefully determined and are based on extensive testing. They guarantee an optimal functioning where the fire transmission device ignites quickly, develops little smoke, the structure is maintained long enough to ignite completely, and also disintegrates quickly enough to form several burning kindling woods.

The tests show that a minimum of four and a maximum of eight standing openings are required to allow the fire transmission device to ignite quickly and without smoke. With a smaller number of standing openings, the ignition is slow and involves considerable smoke development. With more than 8 standing openings, the fire transmission device loses its structure too quickly to achieve a good transfer of the fire to the adjacent combustible materials. Ultimately, 5 standing openings provided the most optimal effect in terms of rate of ignition, smoke development and structural maintenance.

Further tests showed that the diameter of the standing openings also plays an important role. If a diameter of less than 2.5 cm is used, smoke will develop. If the diameter is more than 3.0 cm, the fire transmission device ignites more difficult and slower. A diameter of 2.8 cm for the standing openings gives the best results.

The tests revealed that the edge-to-edge distance between the standing openings played an important role in the speed of ignition of the fire transmission device. The optimal choice for this distance is 0.5 cm to 0.7 cm. At higher values, the rate of ignition of the fire transmission device decreases, and at shorter distances, the structural maintenance is too bad.

The tests showed that the minimum number of indentations in order to have a sufficiently fast ignition and limited smoke development was 6, i.e. two times 3 indentations at an angle of 90°. The depth of the indentations must be at least 2.5 cm to have a sufficiently rapid ignition of the fire transmission device and maximally 3.5 cm because of the structural maintenance. If the width of the indentations is less than 1.0 cm, there is again smoke development, and if the width is more than 1.5 cm, the ignition is slower and the air supply is less optimal. The optimal dimensions for the indentations are 3.0 cm depth and 1.2 cm width.

Because of the structural maintenance and an optimal air flow supply, the number of indentations that pass through one single opening is determined at 2 indentations at an angle of 90°, allowing four channels to be made at an angle of 90° which ensures an optimal air supply.

## Claims

1. Fire transmission device made of a combustible material suitable for transmitting fire to adjoining combustible materials such as cokes, wood, wood pellets, charcoal, coconut or other briquettes, made of a block shaped combustible material having two levels, an upper and a lower level, the upper level having 3 to 7 and preferably 5 standing bores, regularly spread and primarily extending mainly in parallel with each other and mainly axially, and the lower level having 4 to 10 and preferably around 6 recumbent grooves extending across the full width of the device, whereby the bores and grooves are connected to each other forming continuous air channels throughout both levels.

2. Fire transmission device according to claim 1, wherein a fire lighting element is provided in a standing bore, which is preferably slightly recessed into the bore.

3. Fire transmission device according to claim 1 or 2, **characterized in that** the bores having a diameter of 15 to 35 mm, preferably a diameter of 20 to 35 mm.

4. Fire transmission device according to any of the previous claims 1-3, wherein the grooves running in two intersecting directions, preferably perpendicular and preferably having a width of 10 to 15 mm.

5. Fire transmission device according to claim 4, wherein the grooves having a depth of 25 to 35 mm.

6. Fire transmission device according to any of the previous claims 1-5, wherein the device being made of a wood disc.

7. Fire transmission device according to any of the previous claims 1-6, wherein the height of the device being between 45 mm and 75 mm.

8. Fire transmission device according to any of the previous claims 1-7, wherein the upper level having a height between 20 mm and 35 mm and the lower level between 20 mm and 35 mm.

9. Fire transmission device according to any of the previous claims 1-8, wherein each standing bore being crossed by at least 2 grooves.

10. Fire transmission device according to any of the previous claims 1-9, wherein the fire transmission device having a height between 5,0 and 6,0 cm, preferably 5,5 cm, wherein the cross section preferably being 14 cm, wherein the number of bores being minimum 4 and maximum 7 and preferably 5, wherein the diameter of the bores being between 2,5 and 3,0 cm and preferably 2,8 cm, wherein the distance between the bores from edge to edge preferably being 0,5 cm, wherein the number of grooves being at least 6, with the depth of the grooves being between 2,5 cm and 3,5 cm, preferably 3,0 cm, wherein the width of the grooves being between 1.0 cm and 1.5 cm, preferably 1.2 cm, wherein the number of grooves crossing bores being two.

11. Kit of a fire transmission device according to any of the previous claims 1-10 and at least one fire lighting element.

## Patentansprüche

1. Feuerübertragungsvorrichtung aus einem brennbaren Material, das zum Übertragen von Feuer auf benachbarte brennbare Materialien wie beispielsweise Koks, Holz, Holzpellets, Holzkohle, Kokosnuss- oder andere Briketts, geeignet ist, aus einem blockförmigen brennbaren Material, zwei Ebenen aufweisend, eine obere und eine untere Ebene, wobei die obere Eben 3 bis 7 und vorzugsweise 5 aufrechte Bohrungen aufweist, die regelmäßig verteil sind und sich primär hauptsächlich parallel zueinander erstrecken und hauptsächlich axial, und die untere Eben 4 bis 10, vorzugsweise etwa 6 liegende Rillen aufweist, die sich über die gesamte Breite der Vorrichtung erstrecken, wobei die Bohrungen und Rillen miteinander verbunden sind, durchgehende Luftkanäle durch beide Ebenen bildend.

2. Feuerübertragungsvorrichtung nach Anspruch 1, wobei in einer aufrechten Bohrung ein Feuerentzündungselement bereitgestellt ist, das vorzugsweise leicht in die Bohrung eingelassen ist.

3. Feuerübertragungsvorrichtung nach Anspruch 1 oder 2, **dadurch gekennzeichnet, dass** die Bohrungen einen Durchmesser von 15 bis 35 mm aufweisen, vorzugsweise einen Durchmesser von 20 bis 35 mm.

4. Feuerübertragungsvorrichtung nach einem der vorhergehenden Ansprüche 1 bis 3, wobei die Rillen in zwei sich schneidenden Richtungen verlaufen, die vorzugsweise senkrecht zueinander liegen, und vorzugsweise eine Breite von 10 bis 15 mm aufweisen.

5. Feuerübertragungsvorrichtung nach Anspruch 4, wobei die Rillen eine Tiefe von 25 bis 35 mm aufweisen.

6. Feuerübertragungsvorrichtung nach einem der vorhergehenden Ansprüche 1 bis 5, wobei die Vorrichtung aus einer Holzscheibe besteht.

7. Feuerübertragungsvorrichtung nach einem der vorhergehenden Ansprüche 1 bis 6, wobei die Höhe der Vorrichtung zwischen 45 mm und 75 mm beträgt.

8. Feuerübertragungsvorrichtung nach einem der vorhergehenden Ansprüche 1 bis 7, wobei die obere Ebene eine Höhe zwischen 20 mm und 35 mm aufweist und die untere Ebene zwischen 20 mm und 35 mm.

9. Feuerübertragungsvorrichtung nach einem der vorhergehenden Ansprüche 1 bis 8, wobei jede aufrechte Bohrung von mindestens zwei Rillen gekreuzt wird.

10. Feuerübertragungsvorrichtung nach einem der vorhergehenden Ansprüche 1 bis 9, wobei die Feuerübertragungsvorrichtung eine Höhe zwischen 5,0 und 6,0 cm aufweist, vorzugsweise 5,5 cm, wobei der Querschnitt vorzugsweise 14 cm beträgt, wobei die Anzahl der Bohrungen minimal 4 und maximal 7 und vorzugsweise 5 beträgt, wobei der Durchmesser der Bohrungen zwischen 2,5 und 3,0cm und vorzugsweise 2,8 cm beträgt, wobei der Abstand zwischen den Bohrungen von Rand zu Rand vorzugsweise 0,5 cm beträgt, wobei die Anzahl der Rillen mindestens 6 beträgt, wobei die Tiefe der Rillen zwischen 2,5 cm und 3,5 cm, vorzugsweise 3,0 cm beträgt, wobei die Breite der Rillen zwischen 1,0 cm und 1,5 cm, vorzugsweise 1,2 cm beträgt, wobei die Anzahl der Rillen, die Bohrungen kreuzen, zwei beträgt.

11. Satz aus einer Feuerübertragungsvorrichtung nach einem der vorhergehenden Ansprüche 1 bis 10 und mindestens einem Feuerentzündungselement.

## Revendications

1. Dispositif de transmission de feu en matériau combustible approprié pour transmettre du feu à des matériaux combustibles adjacents tels que des cokes, du bois, des granulés de bois, du charbon de bois, de la noix de coco ou d'autres briquettes, en matériau combustible en forme de bloc ayant deux niveaux, un niveau supérieur et un niveau inférieur, le niveau supérieur ayant 3 à 7 et de préférence 5 alésages verticaux, répartis régulièrement et s'étendant essentiellement principalement parallèlement les uns aux autres et principalement axialement, et le niveau inférieur ayant 4 à 10 et de préférence environ 6 rainures allongées s'étendant sur toute la largeur du dispositif, moyennant quoi les alésages et les rainures sont reliés les uns aux autres, formant des canaux d'air continus à travers les deux niveaux.

2. Dispositif de transmission de feu selon la revendication 1, dans lequel un élément d'allumage de feu est prévu dans un alésage vertical, qui est de préférence légèrement inséré dans l'alésage.

3. Dispositif de transmission de feu selon la revendication 1 ou 2, **caractérisé en ce que** les alésages ayant un diamètre de 15 à 35 mm, de préférence un diamètre de 20 à 35 mm.

4. Dispositif de transmission de feu selon l'une quelconque des revendications précédentes 1 à 3, dans lequel les rainures étant disposées dans deux directions se croisant, de préférence perpendiculaires et de préférence ayant une largeur de 10 à 15 mm.

5. Dispositif de transmission de feu selon la revendication 4, dans lequel les rainures ayant une profondeur de 25 à 35 mm.

6. Dispositif de transmission de feu selon l'une quelconque des revendications précédentes 1 à 5, dans lequel le dispositif étant constitué d'un disque en bois.

7. Dispositif de transmission de feu selon l'une quelconque des revendications précédentes 1 à 6, dans lequel la hauteur du dispositif étant entre 45 mm et 75 mm.

8. Dispositif de transmission de feu selon l'une quelconque des revendications précédentes 1 à 7, dans lequel le niveau supérieur ayant une hauteur entre 20 mm et 35 mm et le niveau inférieur entre 20 mm et 35 mm.

9. Dispositif de transmission de feu selon l'une quelconque des revendications précédentes 1 à 8, dans lequel chaque alésage vertical étant croisé par au moins 2 rainures.

10. Dispositif de transmission de feu selon l'une quelconque des revendications précédentes 1 à 9, dans lequel le dispositif de transmission de feu ayant une hauteur entre 5,0 et 6,0 cm, de préférence de 5,5 cm, dans lequel la section transversale étant de préférence de 14 cm, dans lequel le nombre d'alésages étant au minimum de 4 et au maximum de 7 et de préférence de 5, dans lequel le diamètre des alésages étant entre 2,5 et 3,0 cm et de préférence de 2,8 cm, dans lequel la distance entre les alésages de bord à bord étant de préférence de 0,5 cm, dans lequel le nombre de rainures étant d'au moins 6, avec la profondeur des rainures étant entre 2,5 cm et 3,5 cm, de préférence de 3,0 cm, dans lequel la largeur des rainures étant entre 1,0 cm et 1,5 cm, de préférence de 1,2 cm, dans lequel le nombre de rainures croisant des alésages étant de deux.

11. Kit d'un dispositif de transmission de feu selon l'une quelconque des revendications précédentes 1 à 10 et d'au moins un élément d'allumage de feu.
